(19) Europäisches Patentamt
European Patent Office
Office européen des brevets

(11) Publication number: 0 084 935 B1

(12) EUROPEAN PATENT SPECIFICATION

(45) Date of publication of patent specification: 24.09.86

(51) Int. Cl.[4]: G 01 N 27/50, G 01 N 27/28, G 01 N 27/30

(21) Application number: 83300123.3

(22) Date of filing: 11.01.83

# (54) Gas detection device.

(30) Priority: 11.01.82 JP 1805/82

(43) Date of publication of application: 03.08.83 Bulletin 83/31

(45) Publication of the grant of the patent: 24.09.86 Bulletin 86/39

(84) Designated Contracting States: DE GB NL

(56) References cited:
GB-A-1 585 070
JP-A-53 140 098
JP-A-54 148 588
JP-A-54 167 790

(73) Proprietor: Hitachi, Ltd.
5-1, Marunouchi 1-chome
Chiyoda-ku Tokyo 100 (JP)

(72) Inventor: Miyoshi, Tadahiko
1047-295 Nakaiyama Moriyama-cho
Hitachi-shi Ibaraki-ken (JP)
Inventor: Yoshikawa, Masanori
Yuho-ryo 6-20-3 Ayukawa-cho
Hitachi-shi Ibaraki-ken (JP)
Inventor: Taguchi, Mitsuo
94-12 Ohhira Takasaka-cho Uchigou
Iwaki-shi Fukushima-ken (JP)

(74) Representative: Paget, Hugh Charles Edward et al
MEWBURN ELLIS & CO. 2/3 Cursitor Street
London EC4A 1BQ (GB)

EP 0 084 935 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an electrochemical gas-detection device which detects carbon monoxide gas (hereinafter referred to as CO) and hydrogen gas (hereinafter referred to as $H_2$). It may be used when one or both of these gases are present in an environmental gas such as the atmosphere.

Semiconductor sensors have widely been used for detecting gas in industry, particularly the mining industry and in the home. However, they have disadvantages that their measurement precision is liable to be affected by water vapor or other ambient gases, and that their sensitivity is liable to change with time and other factors. Accordingly, an electrochemical gas-detection method in which chromoamperometry is used has been proposed since it gives reliable measurement precision and sensitivity (see Japanese Laid-open Patent Applications No. 53—140098 (1978) and No. 54—148588 (1979), and Laid-open Utility-Model Application No. 54—167790 (1979)). This method has the advantage that it is possible to make a quantitative analysis of the gas components being detected, since the electrolytic current is proportional to the concentration of the gas components.

The electrochemical gas-detection methods so far proposed have the disadvantages that since the gas being monitored comes into contact with the working electrode and the reference electrode simultaneously the device is, immediately responsive to $H_2$ and CO so as to give rise to a large oxidation current between the working electrode and the counter electrode.

Accordingly the device cannot distinguish $H_2$ from CO.

The object of the present invention is to provide a gas detection device of the electrochemical type which is capable of detection of CO and $H_2$ and each separately.

The present invention is set out in claim 1.

The present invention have discovered that when $H_2$ is in contact with the reference electrode the potential of the electrolyte relative to the reference electrode is changed so as to make a polarization current flow toward the reduction side between the working electrode and the counter electrode, while this phenomenon does not occur when CO is in contact with the reference electrode. Thus, it has been found that, when the structure of the invention described above is used, the oxidation current caused by $H_2$ is cancelled by the effect of the polarization current, which makes possible a marked decrease in responsiveness to $H_2$ of the working electrode. Furthermore, it has been discovered that the structure described above makes it possible to discriminate or distinguish $H_2$ from CO, by detection of the transitional flow of a polarization current flow toward the reduction side with the arrival of $H_2$, at the reference electrode, since CO at the reference electrode does not give rise to a polarization current.

For instance, the cell may be provided with means for delaying the arrival of the environmental gas at the working electrode relative to its arrival at the reference electrode so that the response time of the working electrode is longer than that of the reference electrode. The surface area of the working electrode exposed to the environmental gas may be made less than that of the reference electrode.

Embodiments of the present invention will now be described by way of non-limitative example with reference to the accompanying drawings, in which

Figs. 1, 4 and 5 are sectional views of three gas detection devices embodying the present invention;

Fig. 2 is a graph showing the relationship between electrolytic currents generated by CO and $H_2$ and the concentrations of these gases; and

Fig. 3 is a circuit diagram of an embodiment of an alarm system employing the present invention.

In the following description, the atmosphere is taken as an example of the environmental gas being monitored.

Fig. 1 illustrates the embodiment in which at one end of an electrolytic cell 1 there is positioned a working electrode 2 disposed on one surface of a gas-permeable porous membrane 3 which is electrically insulating. In the same way, at the other end of the electrolytic cell 1 there are positioned two electrodes disposed on one surface of a gas-permeable porous membrane 4, these being a counter electrode 5 and a reference electrode 6. The membranes 3 and 4 are made of a water-repellent and porous fluorinated synthetic resin such as Teflon (trade mark of Dupont, U.S.).

The three electrodes 2, 5 and 6 can each be prepared in the following way: the water-repellent porous membrane is coated with a paste prepared by mixing and kneading together a metallic powder and Teflon powder, for instance, and the membrane thus coated is dried, subjected to heat treatment and then shaped into a plate. More specifically, the membrane is coated to a magnitude of 10—30 mg/cm$^2$ with a paste prepared by mixing 10—30% by weight of Teflon powder with platinum black or palladium black and is then subjected to pressure-forming at $4.9 \cdot 10^6$—$9.8 \cdot 10^7$ Pa (50—1000 kg/cm$^2$) and then to heat treatment at a temperature of 200—300°C.

The main parts of the vessel of the electrolytic cell 1 are made of a polycarbonate. The inside of the electrolytic cell 1 sealed in the above way is filled with an electrolyte 7. In the present embodiment, the electrolyte 7 is a solution, and more specifically, a normal solution of sulfuric or a solution of phosphoric acid of 2 to 16N is employed. Covers 8 and 9 provided with entrance holes 10 and 11 are fitted over the outer sides of the gas-permeable porous membranes 3 and 4, respectively. The hole 10 is smaller in diameter than the hole 11, the latter being equal in cross-sectional area to the inside of the electrolytic cell 1. More specifically, the hole 10 has a diameter of 0.5 to 3 mm, while the hole 11 has a diameter of 10 to 30 mm. The electrolytic cell 1 is a cylindrical vessel with an internal diameter of 10 to 40 mm and a length of 20 to 30 mm.

A voltage (Vo) is applied between the working electrode 2 and the reference electrode 6 which is stabilized by a potentiostat 12 and which causes the oxidation-reduction reaction of the component (CO) being detected. An ammeter 13 is connected between the potentiostat 12 and the counter electrode 5 to measure the electrolytic current flowing between the counter electrode 5 and the working electrode 2. The potentiostat 12 automatically controls the voltage so that the voltage between the working electrode 2 and the reference electrode 6 is always fixed (i.e. is not dependent on the current between the working electrode 2 and the counter electrode 5). The current flowing between the working electrode 2 and the counter electrode 5 becomes an output.

With this construction, a predetermined amount of the gas being monitored arrives at the reference electrode 6 before arriving at the working electrode 2 because of the difference in diameter between the entrance holes 10 and 11.

The potential of the reference electrode 6 is set to show the oxidation-reduction potential of oxygen (hereinafter referred to as $O_2$) in the atmosphere, and the potential of the counter electrode 5 is set to reduce $O_2$ in the atmosphere. Therefore the electrochemical reactions involving CO and $H_2$ are as follows. That is to say, at the working electrode 2:

$$CO+H_2O \rightarrow CO_2\uparrow +2H^+ +2e \qquad (1)$$

and

$$H_2 \rightarrow 2H^+ +2e \qquad (2)$$

while at the counter electrode 5:

$$O_2+4H^+ +4e \rightarrow 2H_2O \qquad (3)$$

These reactions are assumed to occur at the interface of the electrolyte 7 with the metallic powder. The water-repellent porous membranes 3 and 4 pass the atmosphere to the electrode surfaces, preventing any leakage of liquid and maintaining the mechanical strength. To obtain the reaction shown by the above expression (1), it is especially desirable that the potential Vo of the working electrode 2 when it is based on the reference electrode 6 showing the oxidation-reduction potential of the $O_2$ is within the range of 0.2 to 0.5V. In addition, it is desirable that the potential of the working electrode 2 should be high, since the higher the potential of the electrode 2 the larger the polarization current induced by the $H_2$. However, when this potential is too high, the zero level (the leakage current when a reduction gas is absent) could become too high to permit detection of the electrolytic current caused by CO gas.

Fig. 2 shows the changes with time of the electrolytic current flowing between the working electrode 2 and the counter electrode 5. These results are obtained using an electrolytic cell 1 having the structure as shown in Fig. 1. The fixed voltage between the reference electrode 6 and the working electrode 2 is set at 0.2V. There is also shown a curve xi of electrolytic current obtained using a prior art sensor. In Fig. 2, the sample gases are, for the curve i a mixture of 200 ppm of CO and the balance air; for the curve ii a mixture of 100 ppm of CO and the balance air; for the curve iii 13000 ppm of $H_2$ balance air; for the curve iv a mixture of 5000 ppm of $H_2$ and the balance air.

As is clear from the figure, an oxidation current flows when CO is present, while the current flows to the reduction side when $H_2$ is present. This is presumably caused by the flow of a polarization current to the reduction side due to the change in potential of the reference electrode 6 which is caused by $H_2$ being in contact with the reference electrode 6 before contacting the working electrode 2. The curve xi is provided as an example for comparison and will be explained later, since it refers to a different structure of electrolytic cell.

Further, in Fig. 2, curve v shows the output when the sample gas is a mixture of 200 ppm of CO, 13000 ppm of $H_2$ and balance air; curve vi when the sample gas is a mixture of 100 ppm of CO, 13000 ppm of $H_2$ and the balance air; curve vii when the sample is a mixture of 200 ppm of CO, 5000 ppm of $H_2$ and the balance air; curve viii when the sample is a mixture of 100 ppm of CO, 5000 ppm of $H_2$ and the balance air. The line A is a critical line which is equivalent to a dangerous CO concentration of, for example, 150 ppm of CO, and the line B is a critical line for a dangerous $H_2$ concentration of, for example 12500 ppm of $H_2$.

A discrimination between $H_2$ and CO can now be performed, from the electrolytic current. Fig. 3 is a schematic illustration of a circuit which sounds an alarm by using such discrimination.

An operational amplifier 14 is provided inside the potentiostat 12. The working electrode 2, the counter electrode 5 and the reference electrode 6 are connected to a ground terminal 15, and terminals 16 and 17, respectively. Terminal 117 is a terminal of the operational amplifier 14 which has another terminal 18. A reference potential (negative potential) is given to terminal 18. A feedback circuit consisting of a resistor and a capacitor is connected between the output side and the terminal 17 of the operational amplifier, and operates so that the potential of terminal 17 becomes equal to that of terminal 18. In this way the potential of the reference electrode 6 is kept at the reference potential, and a fixed potential difference is maintained between the working electrode 2 and the reference electrode 6. In addition, since a negative potential is given to terminal 18, the potential of the working electrode 2 connected to ground is kept high and that of the reference electrode 6 low. The operational amplifier is connected to ground, although this is

not shown in the figure, and a closed circuit of the working electrode 2, terminal 15, ground, operational amplifier 14, terminal 16, counter electrode 5, electrolyte 7, and working electrode 2 is formed via ground. The output side of the operational amplifier 14 and terminal 16 are connected to an amplifier 19 through a resistor. Thus, changes in the electrolytic current appear at an output terminal 20. Terminals 21 and 22 give a comparison voltage to be compared with the output, and the outputs thereof are input via comparators 23 and 24 to buzzers 25 and 26, respectively. For instance, if a comparison voltage A' corresponding to an oxidation current output is given to terminal 21, an alarm is sounded by the buzzer 25 only when the output voltage of terminal 20 becomes higher than the comparison voltage A'. In this way, CO can be detected without any errors caused by the presence of $H_2$. At the same time, it is possible to detect the type of gas, whether it is CO or $H_2$, by the comparison voltage B' corresponding to a reduction current output given to terminal 22. (For $H_2$ gas, a reduction current flows and thereby the buzzer 26 is sounded). Furthermore, it is also possible to sound still another alarm according to differences in the density of the CO, with a comparison voltage C' corresponding to another oxidation current output given to terminal 22.

Experimentation with different fixed potential differences Vo applied between the working electrode 2 and the reference electrode 6 has confirmed that the polarization current caused by $H_2$ increased with increase in the fixed potential difference Vo, reducing the possibility of errors caused by the presence of $H_2$. Further it has been confirmed that a fixed potential difference of 0.1V is sufficient to discriminate a CO concentration of 150 ppm, which must be detected sensitively by a general household gas sensor, from a $H_2$ concentration of 3000 ppm and that a fixed potential difference of at least 0.2V is needed to discriminate a CO concentration of 150 ppm from a $H_2$ concentration of 12500 ppm (one-fourth of the density of LEL (lower explosive limit)). Moreover, it has also been confirmed that a rise in the zero level could make it difficult to measure an output when the fixed potential difference exceeds 0.5V.

The alarm means is not limited to noise making devices, but other means such as visual devices can be employed. Level of alarms (volume or tone of noises, brightness, etc.) may be varied in accordance with detection of $H_2$ or CO. On the other hand, the levels of alarms may be set in accordance with the concentrations of $H_2$ or CO.

The following table shows the relationship between gas components in an environmental gas and the operation of the detection device in the above mentioned example.

In the table, the dangerous $H_2$ concentration is optionally determined below the explosive limit (50000 ppm) in accordance with appropriate regulations or purposes; this concentration is 12500 ppm, for example. In the table, the dangerous CO concentration is set to 150 ppm for example. A human suffers toxic symptoms in an atmosphere containing 150 ppm of CO or more. When the concentration of CO exceeds 200 ppm, a human will die within one hour.

TABLE

| $H_2$ concentration / CO concentration | ≧dangerous $H_2$ concentration | <dangerous $H_2$ concentration | zero |
| --- | --- | --- | --- |
| ≧dangerous CO concentration | At first, reduction current larger than level B flows in the detection circuit to make noises by buzzer 26. Next, oxidation current larger than level A flows in the circuit to make noises by buzzer 25. (curve v) | At first, reduction current smaller than level B flows in the circuit which is not enough to make noises by buzzer 26. Next, oxidation current larger than level A flows in the circuit to make noises by buzzer 25. (curve vii) | Oxidation current larger than level A flows from the beginning in the circuit to make noises by buzzer 25. |
| <dangerous CO concentration (not zero) | At first, reduction current larger than level B flows in the circuit to make noises by buzzer 26. Next, oxidation current smaller than level A flows in the circuit which is not enough to make noises by buzzer 25. (curve vi) | At first, reduction current smaller than level B flows in the circuit which is not enough to make noises by buzzer 26. Next, oxidation current smaller than level A flows in the circuit which is not enough to make noises by buzzer 25. (curve viii) | Oxidation current smaller than level A flows from the beginning in the circuit which is not enough to make noises by buzzer 25. |
| zero | At first, reduction current larger than level B flows in the circuit to make noises by buzzer 26. Next, oxidation current smaller than level A flows in the circuit which is not enough to make noises by buzzer 25. (curve iii) | At first, reduction current smaller than level B flows in the circuit which is not enough to make noises by buzzer 26. Next, oxidation current smaller than level A flows in the circuit which is not enough to make noises by buzzer 25. (the curve iv) | No electrochemical reaction. |

The gas detection method and device of the embodiment explained above have the advantage that they enable an extremely reliable detection of CO without any risk of errors caused by the presence of $H_2$. They have the secondary advantage that the device is very simple, since the bleed holes 10 and 11 are the sole structure for delaying the time of arrival of the gas being monitored at the working electrode 2. The water-repellent porous membranes 3 and 4 have, as said before, the effects of permitting passage of the air, of sealing in the liquid and of reinforcing the electrodes. Moreover, the two kinds of alarm units attached enable discrimination of different types of gas, and of the density thereof.

Fig. 4 shows a second embodiment of the present invention. The substantial difference of this from the first embodiment is that gas chambers and a filler are provided. The same components as those shown in Fig. 1 are given the same reference numerals.

As is clear from Fig. 4, the bleed hole 11 on the side of the reference electrode 6 is smaller than that in Fig. 1 and has the same diameter as that of the entrance hole 10 for the working electrode 2. A gas chamber 27 filled with a filler 28 is provided next to the working electrode 2. A gas chamber 29 is provided next to the reference electrode 6, but this is not filled with a filler. The gas chambers 27 and 29 are of the same size. The filler 28 is gas adsorbent, and more specifically is a mixture of silica gel and activated carbon in the ratio 1:1, and the adsorbent layer is made 2 mm thick.

Using this construction, the time of arrival of the gas being monitored can be made later at the working electrode 2 than at the reference electrode 6.

Thus in this embodiment, the following effects are obtained from the employment of the gas adsorbent, in addition to the features of the first embodiment. (1) Ethanol, acetic acid or similar gases which can cause errors, together with $H_2$, can be removed by adsorption, and (2) organic amines which reduce the activity of the working electrode 2 can be removed and thereby the characteristics of the device can be kept stable for a long time. Accordingly, there is the advantage that the elimination of errors, caused by various gases makes the device highly reliable. For this purpose, it is preferable that an adsorbent having a large specific surface area is employed. The gas adsorbent employed is not limited to the example given above, and zeolite for instance may be employed, while the employment of an adsorbent on a carrier is also effective. Moreover, fillers other than a gas adsorbent may be employed, if used only for the purpose of adjusting the time of arrival.

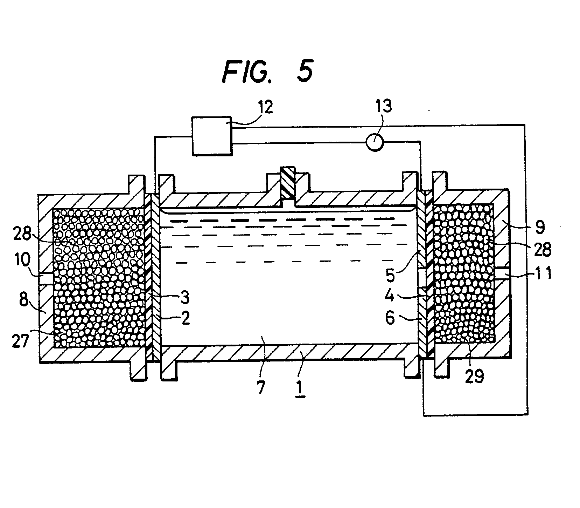

Fig. 5 shows a third embodiment of the present invention. The same components as those shown in Figs. 1 and 4 are given the same reference numerals. As Fig. 5 shows, the gas chamber 27 is made larger than the gas chamber 29, and both are filled with the filler 28. The amount of the filler 28, which is effectively the same gas adsorbent as that used in the second embodiment, is 1.5 to 3 times more in the gas chamber 27 than in the gas chamber 29. For example, the desired effect has been obtained consistently by making the filler layer 5 mm thick in gas chamber 27 and by making the filler layer 2 mm thick in gas chamber 29.

By this arrangement, the time of arrival of the gas being monitored at the working electrode 2 can also be delayed relative to that at the reference electrode 6. Thus in this embodiment, effects similar to those of the second embodiment can be obtained. Experiment has shown that the tendencies of the curves i to viii in Fig. 2 appear in the present embodiment as well.

If the filler in the gas chamber 27 shown in Fig. 5 is removed as an experiment, the arrival of the gas being monitored at the working electrode 2 is earlier than that at the reference electrode 6. In this case, the output in relation to CO is as shown by the curves i and ii in Fig. 2, while the output in relation to $H_2$ is as indicated by the curve xi. This presumably means that $H_2$ first arrives at the working electrode 2 and induces flow of an oxidation current, and that it arrives later at the reference electrode 6 and the large polarization current thus induced cancels the oxidation current. In this way, when the time of arrival of the gas being monitored at the working electrode is made earlier, the oxidation current also flows at an early stage in relation to $H_2$, which results in errors.

When $H_2$ and CO reach the gas detection device simultaneously, a reduction current generally flows at once and immediately afterwards a current in the oxidation current direction flows, since $H_2$ has a higher velocity of diffusion than CO.

In all of the above three embodiments a solution is employed as the electrolyte. However, instead of a solution, a sol or a solid electrolyte such as an $H^+$ conducting solid electrolyte, for instance, are effective in the present invention. The working electrode 2 and the reference electrode 6 can be exchanged with each other for the purpose of the present invention. Moreover, to distinguish CO from $H_2$ and other gases (e.g. alcohol) it is effective to remove or reduce the $H_2$ and other gases beforehand. One way of achieving this removal or reduction is to bring the components of the gas being monitored into contact with catalysts before their arrival at the working electrode. For removal and reduction of other various gases, $SnO_2$, $TiO_2$, CuO or $Cr_2O_3$, etc. are effective as catalysts, and a method wherein the gas being monitored is made to pass over a catalyst at a temperature of 100—400°C, and reach the electrolytic cell thereafter, is practical.

As explained above, the present invention may allow extremely reliable detection of CO while eliminating errors caused by the presence of $H_2$.

**Claims**

1. A gas detection device having an electrolytic

cell in which, in use, first surfaces of a working electrode (2), a counter electrode (5) and a reference electrode (6) are kept in contact with an electrolyte (7) and second surfaces of said working electrode (2), said counter electrode (5) and said reference electrode (6) are exposed to a gas being monitored the electrodes effecting contact of the gas with the electrolyte, the device further having means (12) for applying predetermined potentials to said working electrode (2), said counter electrode (5) and said reference electrode (6) so as to cause oxidation of carbon monoxide and hydrogen in the gas being monitored at said working electrode (2) and reduction of oxygen in the gas being monitored at said counter electrode (5), and current detecting means (13) connected between said working electrode (2) and said counter electrode (5) for detecting electrolytic current flowing therebetween arising from electrochemical reactions of carbon monoxide, hydrogen and oxygen in the gas being monitored at the respective electrodes (2, 5, 6), characterized in that the response time at the working electrode (2) to the gas being monitored is longer than that at the reference electrode (6), so that hydrogen and carbon monoxide in the gas can be detected separately.

2. A device according to claim 1, wherein in order to provide said longer response time of the working electrode (2), the surface area of the working electrode (2) exposed in use to said gas being monitored is smaller than that of the reference electrode (6).

3. A device according to claim 2 wherein the second surfaces of said working electrode (2), said reference electrode (6) and said counter electrode (5) are covered with electrically insulating gas-permeable membranes (3, 4), and there are provided covers (8, 9) with access apertures (10, 11) for access of the gas being monitored to the respective membranes (3, 4) the size of the access aperture(s) for said working electrode (2) being smaller than that of the access aperture(s) for said reference electrode (6).

4. A device according to claim 1 wherein, in order to provide said longer response time of the working electrode (2), said cell is provided with means for delaying the arrival of the gas being monitored at the working electrode (2) relative to its arrival at the reference electrode (6).

5. A device according to claim 4, wherein said delaying means is a layer (28) of gas adsorbent which is provided in a passage between the second surface of said working electrode and the gas being monitored.

6. A device according to claim 5, wherein there is also provided a layer (28) of a gas adsorbent in a passage between the second surface of the reference electrode (6) and the gas being monitored.

7. A device according to claim 5 in which chambers (8, 9) with access apertures (10, 11) for the gas being monitored are provided adjacent the working electrode (2) and the reference electrode (6) respectively, so that the distance between said access aperture for the working electrode (2) and said working electrode (2) is greater than the distance between said access aperture for the reference electrode (6) and said reference electrode (6).

8. A device according to claim 7 in which at least said chamber (8) adjacent said working electrode (2) is filled with a filler (28).

9. A device according to claim 8, in which said filler (28) is a gas adsorbent or a carrier supporting a gas adsorbent.

10. A device according to claim 9 in which said gas adsorbent is activated carbon, silica gel or zeolite.

11. A device according to any one of the preceding claims in which said predetermined potential applied between the working electrode (2) and the reference electrode (6) is within the range of 0.2 to 0.5 V.

12. A gas detection device according to any one of the preceding claims further having means for outputting an alarm or other indication signal when the electrolytic current detected by said current detecting means due to carbon monoxide or hydrogen gas in the gas being monitored exceeds a predetermined value.

**Patentansprüche**

1. Gasnachweisvorrichtung mit einer Elektrolytzelle, in der im Betrieb erste Oberflächen einer Arbeitselektrode (2), einer Gegenelektrode (5) und einer Bezugselektrode (6) mit einem Elektrolyt (7) in Kontakt stehen und zweite Oberflächen der Arbeitselektrode (2), der Gegenelektrode (5) und der Bezugselektrode (6) einem überwachten Gas ausgesetzt sind, wobei die Elektroden einen Kontakt des Gases mit dem Elektrolyt bewirken, wobei die Vorrichtung ferner eine Einrichtung (12) zum Anlegen vorgegebener Potentiale an die Arbeitselektrode (2), die Gegenelektrode (5) und die Bezugselektrode (6), um die Oxidation des in dem überwachten Gas enthaltenen Kohlenmonoxide und Wasserstoffs an der Arbeitselektrode (2) und die Reduktion des in dem überwachten Gas enthaltenen Sauerstoffs an der Gegenelektrode (5) zu bewirken, sowie eine zwischen die Arbeitselektrode (2) und die Gegenelektrode (5) eingeschaltete Strommeßeinrichtung (13) umfaßt, um einen zwischen diesen Elektroden fließenden elektrolytischen Strom zu erfassen, der sich aus elektrochemischen Reaktionen von Kohlenmonoxid, Wasserstoff und Sauerstoff in dem nachzuweisenden Gas an den jeweiligen Elektroden (2, 5, 6) ergibt, dadurch gekennzeichnet, daß die Ansprechzeit auf das überwachte Gas an der Arbeitselektrode (2) länger ist als an der Bezugselektrode (6), so daß sich Wasserstoff und Kohlenmonoxid in dem Gas getrennt nachweisen lassen.

2. Vorrichtung nach Anspruch 1, wobei zur Erzielung der längeren Ansprechzeit der Arbeitselektrode (2) deren beim Betrieb dem überwachten Gas ausgesetzte Oberfläche kleiner ist als die der Bezugselektrode (6).

3. Vorrichtung nach Anspruch 2, wobei die zweiten Oberflächen der Arbeitselektrode (2), der Bezugselektrode (6) und der Gegenelektrode (5) mit elektrisch isolierenden gasdurchlässigen Membranen (3, 4) bedeckt sind, und daß Deckel (8, 9) mit Zutrittsöffnungen (10, 11) für den Zutritt des überwachten Gases an die jeweiligen Membranen (3, 4) vorgesehen sind, wobei die Größe der Zutrittsöffnung(en) für die Arbeitselektrode (2) kleiner ist als die der Zutrittsöffnung(en) für die Bezugselektrode (6).

4. Vorrichtung nach Anspruch 1, wobei zur Erzielung der längeren Ansprechzeit der Arbeitselektrode (2) die Zelle mit einer Einrichtung zur Verzögerung des Eintreffens des überwachten Gases an der Arbeitselektrode (2) relativ zu dessen Eintreffen an der Bezugselektrode (6) versehen ist.

5. Vorrichtung nach Anspruch 4, wobei die Verzögerungseinrichtung eine Schicht (28) aus Gasabsorptionsmittel ist, die in einer Durchführung zwischen der zweiten Oberfläche der Arbeitselektrode und dem überwachten Gas vorgesehen ist.

6. Vorrichtung nach Anspruch 5, wobei eine Schicht (28) aus einem Gasabsorptionsmittel auch in einer Durchführung zwischen der zweiten Oberfläche der Bezugselektrode (6) und dem überwachten Gas vorgesehen ist.

7. Vorrichtung nach Anspruch 5, wobei der Arbeitselektrode (2) und der Bezugselektrode (6) jeweils benachbart Kammern (8, 9) mit Zutrittsöffnungen (10, 11) für das überwachte Gas derart vorgesehen sind, daß der Abstand zwischen der Zutrittsöffnung für die Arbeitselektrode (2) und der Arbeitselektrode (2) größer ist als der Abstand zwischen der Zutrittsöffnung für die Bezugselektrode (6) und der Bezugselektrode (6).

8. Vorrichtung nach Anspruch 7, wobei mindestens die der Arbeitselektrode (2) benachbarte Kammer (8) mit einem Füllstoff (28) gefüllt ist.

9. Vorrichtung nach Anspruch 8, wobei der Füllstoff (28) ein Gasabsorptionsmittel oder ein Träger mit einem Gasabsorptionsmittel ist.

10. Vorrichtung nach Anspruch 9, wobei das Gasabsorptionsmittel Aktivkohle, Silicagel oder Zeolith ist.

11. Vorrichtung nach einem der vorhergehenden Ansprüche, wobei das zwischen der Arbeitselektrode (2) und der Bezugselektrode (6) anliegende vorgegebene Potential im Bereich von 0,2 bis 0,5 V liegt.

12. Gasnachweisvorrichtung nach einem der vorhergehenden Ansprüche, umfassend ferner eine Einrichtung zur Ausgabe eines Alarm- oder sonstigen Anzeigesignals, wenn der von der Strommeßeinrichtung erfaßte elektrolytische Strom aufgrund des in dem überwachten Gas enthaltenen Kohlenmonoxids oder Wasserstoffgases einen vorgegebenen Wert überschreitet.

**Revendications**

1. Dispositif de détection de gaz ayant une cellule électrolytique dans laquelle, en utilisation, des premières surfaces d'une électrode de travail (2), d'une contre-électrode (5) et d'une électrode de référence (6) sont maintenues en contact avec un électrolyte (7) et des secondes surfaces de ladite électrode de travail (2), de ladite contre-électrode (5) et de ladite électrode de référence (6) sont exposées à un gaz qui est contrôlé, les électrodes effectuant un contact du gaz avec l'électrolyte, le dispositif ayant de plus un moyen (12) pour appliquer des potentiels prédéterminés à ladite électrode de travail (2), à ladite contre-électrode (5) et à ladite électrode de référence (6) afin de provoquer l'oxydation de l'oxyde de carbone et de l'hydrogène dans le gaz qui est contrôlé à ladite électrode de travail (2) et le réduction de l'oxygène dans le gaz qui est contrôlé à ladite contre-électrode (5), et un moyen de détection de courant (13) relié entre ladite électrode de travail (2) et ladite contre-électrode (5) pour détecter un courant électrolytique s'écoulant entre elles provenant des réactions électrochimiques de l'oxyde de carbone, de l'hydrogène et de l'oxygène dans le gaz qui est contrôlé aux électrodes respectives (2, 5, 6), caractérisé en ce que le temps de réponse à l'électrode de travail (2) au gaz qui est contrôlé est plus long que celui à l'électrode de référence (6) de façon que l'hydrogène et l'oxyde de carbone dans le gaz puissent être séparément détectés.

2. Dispositif selon la revendication 1 où, afin d'obtenir ledit plus long temps de réponse de l'électrode travail (2), la surface de l'électrode de travail (2) exposée en utilisation audit gaz qui est contrôlé est plus petite que celle de l'électrode de référence (6).

3. Dispositif selon la revendication 2 où les secondes surfaces de ladite électrode de travail (2), de ladite électrode de référence (6) et de ladite contre-électrode (5) sont couvertes de membranes électriquement isolantes perméables aux gaz (3, 4) et on prévoit des couvercles (8, 9) ayant des ouvertures d'accès (10, 11) pour l'accès du gaz qui y est contrôlé aux membranes respectives (3, 4), la dimension de la ou des ouvertures d'accès de ladite électrode travail (2) étant plus petite que celle de la ou des ouvertures d'accès pour ladite électrode de référence (6).

4. Dispositif selon la revendication 1 où, afin d'obtenir ladit plus long temps de réponse de l'électrode de travail (2), ladite cellule est pourvue d'un moyen pour retarder l'arrivée du gaz qui est contrôle à l'électrode de travail (2) relativement à son arrivée à l'électrode de référence (6).

5. Dispositif selon la revendication 4, où ledit moyen retardateur est une couche (28) d'un gaz adsorbant qui est formée dans un passage entre la second surface de ladite électrode de travail et le gaz qui est contrôlé.

6. Dispositif selon la revendication 5, où on prévoit également une couche (28) d'un gaz adsorbant dans un passage entre la seconde surface de l'électrode de référence (6) et le gaz qui est contrôlé.

7. Dispositif selon la revendication 5 où des chambres (8, 9) ayant des ouvertures d'accès (10,

11) pour le gaz qui est contrôlé sont prévues adjacentes à l'électrode de travail (2) et à l'électrode de référence (6), respectivement, de façon que la distance entre ladite ouverture d'accès pour l'électrode de travail (2) et ladite électrode de travail (2) soit plus importante que la distance entre ladite ouverture d'accès pour l'électrode de référence (6) et ladite électrode de référence (6).

8. Dispositif selon la revendication 7 où au moins ladite chambre (8) adjacente à ladite électrode de travail (2) est remplie d'une charge (28).

9. Dispositif selon la revendication 8, où ladite charge (28) est un gaz adsorbant ou un support supportant un gaz adsorbant.

10. Dispositif selon la revendication 9 où ladite gaz adsorbant est du charbon activé, du gel de silice ou de la zéolite.

11. Dispositif selon l'une quelconque des revendications précédentes où le potentiel appliqué entre l'électrode de travail (2) et l'électrode de référence (6) est compris entre 0,2 et 0,5 V.

12. Dispositif de détection de gaz selon l'une quelconque des revendications précédentes ayant de plus un moyen pour émettre une alarme ou autre signal d'indication lorsque le courant électrolytique détecté par ledit moyen de détection de courant du fait de l'oxyde de carbone ou de l'hydrogène gazeux dans le gaz qui est contrôlé dépasse une valeur prédéterminée.

FIG. 1

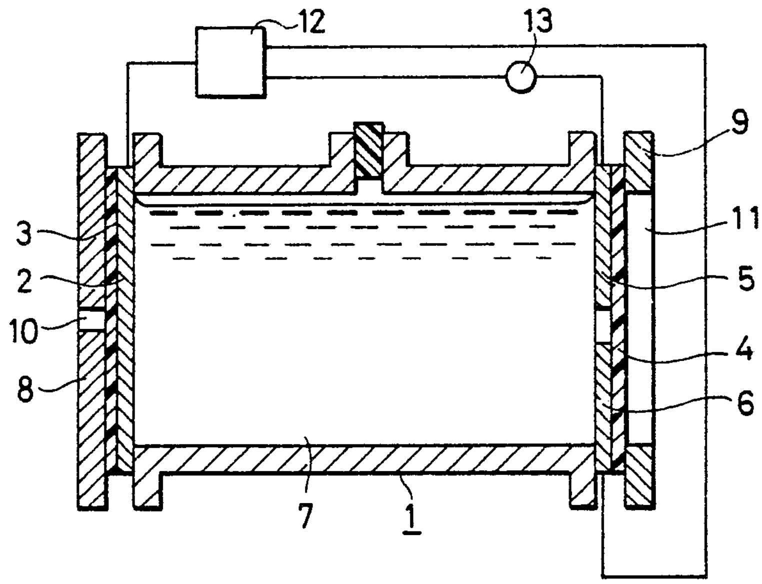
12
13
9
3
11
2
5
10
4
8
6
7
1

FIG. 2

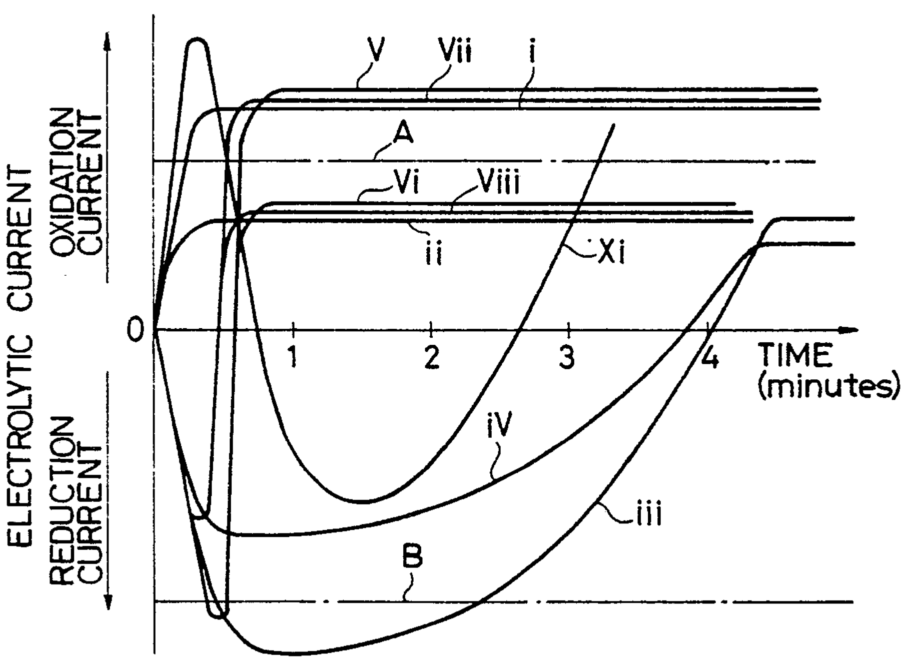
ELECTROLYTIC CURRENT
OXIDATION CURRENT
REDUCTION CURRENT
V
Vii
i
A
Vi
Viii
ii
Xi
0
1
2
3
4
TIME (minutes)
iV
iii
B

FIG. 3

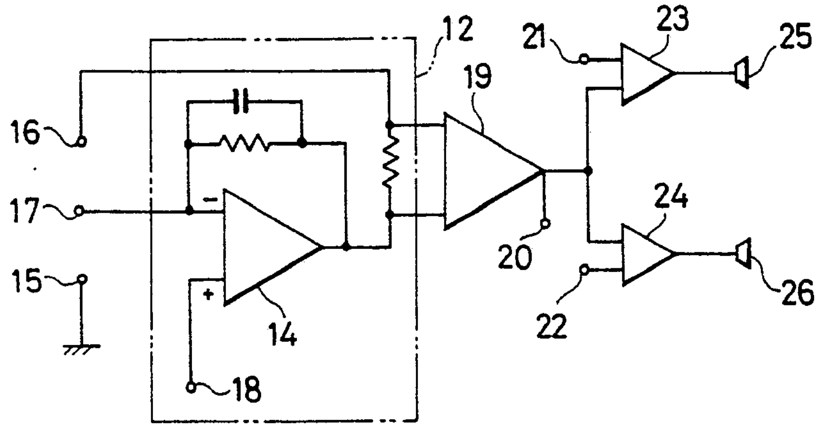
12
21
23
25
19
16
17
15
14
18
20
22
24
26

FIG. 4

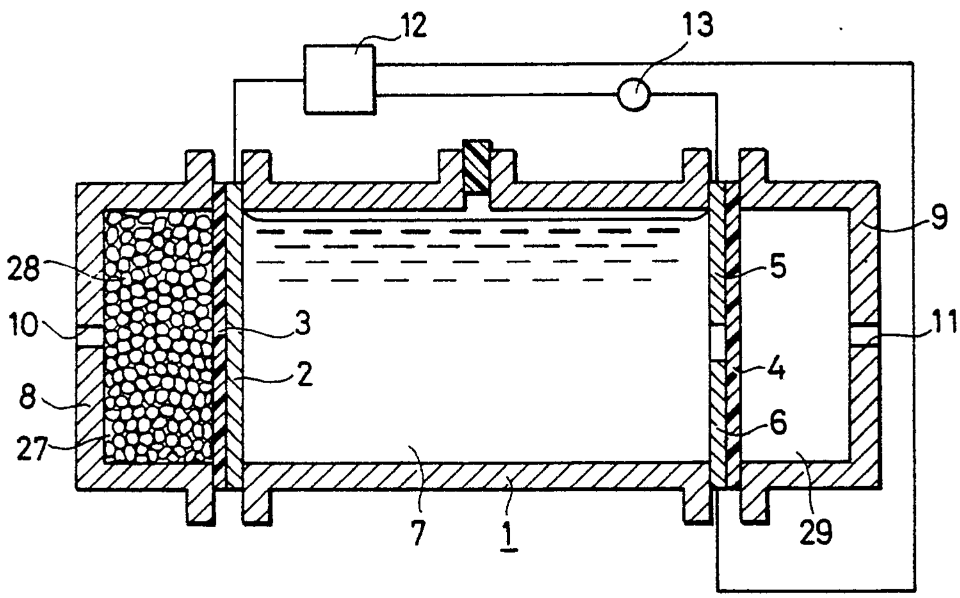
12
13
28
10
8
27
3
2
7
1
5
4
6
29
9
11

FIG. 5